# EUROPÄISCHE PATENTSCHRIFT

(11) **EP 0 555 678 B1**
(45) Veröffentlichungstag und Bekanntmachung des Hinweises auf die Patenterteilung: **11.12.1996**
(21) Anmeldenummer: 93101043.3
(22) Anmeldetag: 23.01.1993
(51) Int. Cl.: C09B 67/22

(54) **Mischungen von Monoazofarbstoffen**
Mixtures of monoazo dyes
Mélanges de colorants monoazoiques

(30) Priorität: 14.02.1992 DE 4204424
(43) Veröffentlichungstag der Anmeldung: 18.08.1993
(73) Patentinhaber: DyStar Japan Ltd., Osaka (JP)
(72) Erfinder: Bühler, Ulrich, Dr., W-8755 Alzenau (DE)
(74) Vertreter: Muley, Ralf, Dr.

(56) Entgegenhaltungen:
- EP-A- 0 277 529
- EP-A- 0 300 626
- EP-A- 0 324 404
- EP-A- 0 346 715
- DE-A- 3 702 967
- DE-A- 3 906 189

## Beschreibung

Die vorliegende Erfindung betrifft Mischungen von Monoazofarbstoffen, Verfahren zu ihrer Herstellung sowie ihre Verwendung zum Färben und Bedrucken von hydrophoben synthetischen Fasermaterialien und deren Mischungen mit natürlichen Faserstoffen.

Farbstoffmischungen, die den erfindungsgemäßen ähnlich sind, sind bereits bekannt und beispielsweise in EP-A 277 529, DE-A 39 06 189 und EP-A 300 626 beschrieben. Sie sind mit dem Ziel entwickelt worden, anthrachinoide Blaufarbstoffe, wie insbesondere C.I. Disperse Blue 56 aus ökonomischen und ökologischen Gründen durch Azofarbstoffe zu ersetzen. Dementsprechend sollen sie im Farbton und dabei insbesondere in der Brillanz möglichst nahe an den Anthrachinonfarbstoff herankommen, ein mindestens gleich gutes Aufbau-, Auszieh- und Egalisierverhalten aufweisen und eine ausreichende Färbesicherheit im Hinblick auf pH-Wert, reduzierende Einflüsse und Temperaturschwankungen gewährleisten. Im übrigen werden auch bessere Gebrauchsechtheiten, wie z.B. Thermofixierechtheit und Naßechtheiten, angestrebt. Schließlich soll das Metamerieverhalten, d.h., die Farbtonabweichung einer Färbung bei künstlichem Licht im Vergleich zum Farbton bei Tageslicht, dem des C.I. Disperse Blue 56 möglichst entsprechen oder möglichst günstig sein.

Es wurde nun überraschenderweise gefunden, daß die erfindungsgemäßen Farbstoffmischungen in ihren Eigenschaften wesentlich näher an das anthrachinoide Blue 56 herankommen als die bisher aus der Literatur bekannten.

Die Einzelfarbstoffe der erfindungsgemäßen Farbstoffmischungen sind bereits bekannt und beispielsweise in der DE-PS 17 94 402, der EP-B 36 512 und der EP-A 324 409 beschrieben.

Die vorliegende Erfindung betrifft Mischungen von Monoazofarbstoffen, dadurch gekennzeichnet, daß sie aus einem oder mehreren Farbstoffen der allgemeinen Formel I 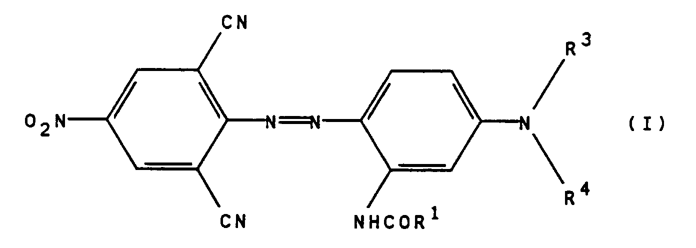 einem oder mehreren Farbstoffen der allgemeinen Formel II 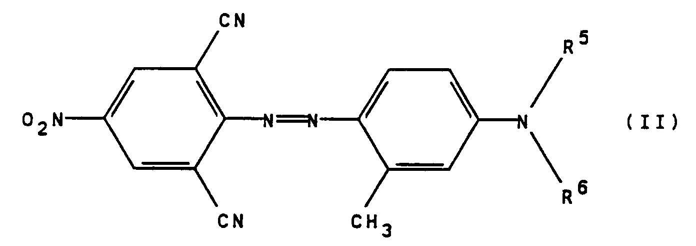 und einem oder mehreren Farbstoffen der allgemeinen Formel III 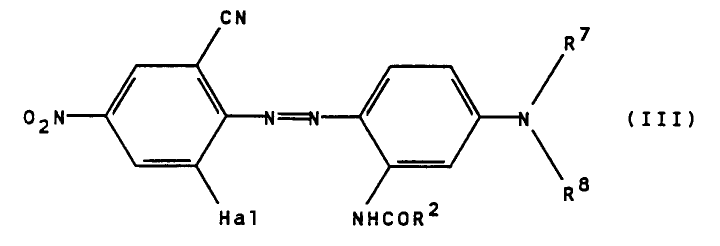 bestehen, wobei
R¹ bis R⁸ unabhängig voneinander Methyl, Ethyl oder n-Propyl und R¹ und R² darüberhinaus auch i-Propyl und
Hal Chlor oder Brom
bedeuten.

Bevorzugte erfindungsgemäße Farbstoffmischungen bestehen aus je einem oder zwei Farbstoffen der allgemeinen Formeln I bis III. Besonders bevorzugte erfindungsgemäße Farbstoffmischungen bestehen aus einem oder zwei Farbstoffen der allgemeinen Formel I und je einem Farbstoff der allgemeinen Formeln II und III. Bevorzugte erfindungsgemäße Farbstoffmischungen sind auch solche, in denen Hal für Brom steht sowie solche, in denen die Reste R³ bis R⁸ für n-Propyl oder insbesondere Ethyl stehen. Es ist dabei insbesondere bevorzugt, wenn jeweils R³ und R⁴, R⁵ und R⁶ sowie R⁷ und R⁸ gleich sind. Besonders bevorzugt sind alle Reste R³ bis R⁸ gleich.

Weiterhin sind erfindungsgemäße Farbstoffmischungen bevorzugt, in denen R¹/R³/R⁴ Methyl/Ethyl/Ethyl, Methyl/n-Propyl/n-Propyl, Ethyl/Ethyl/Ethyl, n-Propyl/Ethyl/Ethyl oder i-Propyl/Ethyl/Ethyl; R⁵ und R⁶ Ethyl; und Hal/R²/R⁷/R⁸ Brom/Methyl/Ethyl/Ethyl oder Brom/Ethyl/Ethyl/Ethyl bedeuten.

In bevorzugten erfindungsgemäßen Farbstoffmischungen, die zwei Farbstoffe der allgemeinen Formel I enthalten, weisen die Reste R¹, R³ und R⁴ die Bedeutungen Methyl, Ethyl, Ethyl und n-Propyl, Ethyl, Ethyl oder die Bedeutungen Methyl, Ethyl, Ethyl und Methyl, n-Propyl, n-Propyl auf.

In den erfindungsgemäßen Farbstoffmischungen kann das Verhältnis der Farbstoffe der allgemeinen Formeln I bis III variieren. Bevorzugt liegt der Anteil des oder der Farbstoffe der allgemeinen Formel I zwischen 29 und 39 Gew.%, der Anteil des oder der Farbstoffe der allgemeinen Formel II zwischen 36 und 46 Gew.% und der Anteil des oder der Farbstoffe der allgemeinen Formel III zwischen 20 und 30 Gew.%.

Die erfindungsgemäßen Farbstoffmischungen werden vor dem Färben formiert, d.h. sie werden in Gegenwart von Wasser und von Dispergiermitteln in geeigneten Mühlen, wie z.B. Kugel- oder Sandmühlen, gemahlen und, wenn eine pulverförmige Farbstoff-Formierung hergestellt werden soll, anschliessend sprühgetrocknet.

Geeignete Dispergiermittel sind z.B. anionische oder nichtionische Dispergiermittel, die auch gemeinsam eingesetzt werden können.

Anionische Dispergiermittel sind z.B. Kondensationsprodukte aus aromatischen Sulfonsäuren und Formaldehyd, insbesondere Kondensationsprodukte aus Alkylnaphthalinsulfonsäuren und Formaldehyd, Kondensationsprodukte aus gegebenenfalls substituiertem Phenol mit Formaldehyd und Natriumbisulfit, Alkalimetallsalze von Kondensationsprodukten aus gegebenenfalls substituiertem Phenol, Naphthalin- bzw. Naphtholsulfonsäuren, Formaldehyd und Natriumbisulfit, Alkalimetallsalze von Kondensationsprodukten aus gegebenenfalls substituierten Phenolsulfonsäuren, Formaldehyd und Harnstoff sowie Alkalimetallsalze von Ligninsulfonsäuren; Alkyl- oder Alkylaryl-sulfonate, sowie Alkyl-aryl-polyglykolethersulfate.

Nichtionische Dispergiermittel oder Emulgatoren sind z.B. Umsetzungsprodukte von Alkylenoxiden, wie z.B. Ethylen- oder Propylenoxid mit alkylierbaren Verbindungen, wie z.B. Fettalkoholen, Fettaminen, Fettsäuren, Phenolen, Alkylphenolen, Arylalkylphenolen, Arylalkylarylphenolen und Carbonsäureamiden, wie z.B. Anlagerungsprodukte von 5 bis 10 Ethylenoxid-Einheiten an C₈-C₁₀-Alkylphenole.

Die Mahlung erfolgt bei Temperaturen zwischen 10 und 90^{o}C, vorzugsweise bei 30 bis 60^{o}C. Bei der gemeinsamen Formierung getrennt hergestellter Einzelkomponenten ist die gemeinsame Mahlung bei Temperaturen über 30^{o}C vorteilhaft. Die Farbstoffteilchen werden dabei mechanisch so weit zerkleinert, daß eine optimale spezifische Oberfläche erreicht wird und die Sedimentation des Farbstoffs möglichst gering ist. Die Teilchengrößen der Farbstoffe liegen im allgemeinen zwischen 0,5 und 5 µ, vorzugsweise bei etwa 1 µ.

Die erfindungsgemäßen Farbstoffmischungen können nach verschiedenen Verfahren hergestellt werden, z.B. durch Mischen der getrennt hergestellten Einzelfarbstoffe, wobei bevorzugt bereits formierte Einzelfarbstoffe gemischt werden. Dieser Mischprozeß erfolgt in geeigneten Mischern, wie z.B. Taumelmischern oder Rührwerken. Getrennt formierte Einzelfarbstoffe können aber auch durch Einrühren in Färbeflotten gemischt werden.

In einer bevorzugten Variante dieses Verfahrens werden die Farbstoffe der allgemeinen Formeln I und II durch gemeinsamen Cyanaustausch hergestellt, gegebenenfalls gemeinsam formiert und dann mit dem oder den getrennt hergestellten und gegebenenfalls formierten Farbstoffen der allgemeinen Formel III gemischt. Der gemeinsame Cyanaustausch ist dadurch gekennzeichnet, daß man in Farbstoffmischungen, die aus mindestens einem Farbstoff der allgemeinen Formel IV und mindestens einem Farbstoff der allgemeinen Formel V 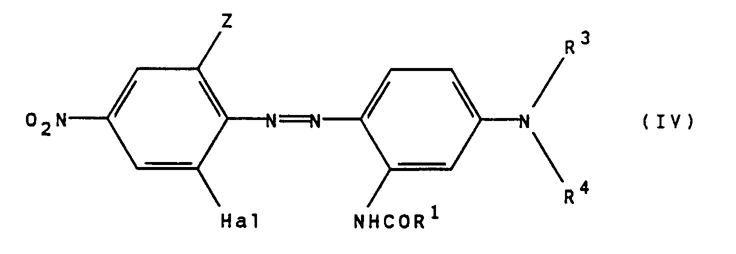 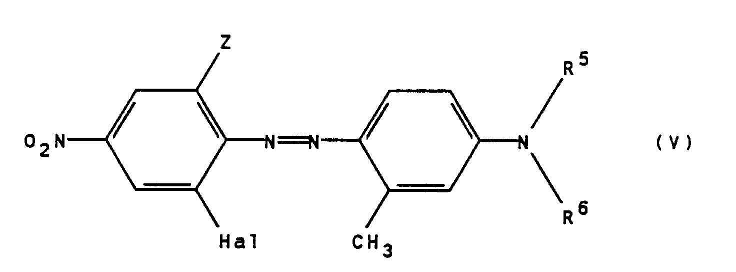 bestehen, in denen Z für Cyan oder Halogen und Hal für Halogen, vorzugsweise Brom, steht und R¹ sowie R³ bis R⁶ die oben angegebenen Bedeutungen haben, in an sich bekannter Weise Halogen gegen Cyan austauscht, wie es z.B. in der GB-PS 1 125 685 für Einzelfarbstoffe beschrieben ist. Die Zusammensetzung der Mischung der Farbstoffe der allgemeinen Formeln IV und V wird dabei im gewünschten Mischungsverhältnis gewählt.

Erfindungsgemäße Farbstoffmischungen können weiterhin durch gemeinsame Formierung der getrennt hergestellten Mischungskomponenten, d.h. durch gemeinsame Mahlung und/oder Sprühtrocknung, hergestellt werden.

Bevorzugt werden die erfindungsgemäßen Farbstoffmischungen in einer thermischen Behandlung hergestellt, die dadurch gekennzeichnet ist, daß man die Einzelfarbstoffe gemeinsam, gegebenenfalls unter Druck, in Wasser eine halbe bis mehrere Stunden auf Temperaturen von 50 bis 150^{o}C, vorzugsweise 90 bis 130^{o}C, erhitzt und wieder abkühlt. Dieses Erhitzen erfolgt vorteilhaft in Gegenwart eines oder mehrerer Dispergiermittel oder eines organischen Lösungsmittels. Solche Lösungsmittel sind z.B. Methanol, Ethanol, Dimethylformamid oder Dimethylsulfoxid, vorzugsweise jedoch in Wasser wenig lösliche Lösungsmittel wie Toluol, Chlorbenzol, 1.2-Dichlorbenzol oder Butylacetat. Diese Lösungsmittel können nach der thermischen Behandlung wieder abdestilliert werden. Sie können aber auch durch Filtration und anschließendes Waschen der Mischung mit Wasser abgetrennt werden. An dieses Herstellungsverfahren kann sich dann die Formierung der Mischung anschließen.

Besonders bevorzugt werden die erfindungsgemäßen Farbstoffmischungen durch gemeinsames Lösen der Einzelfarbstoffe in einem organischen Lösungsmittel oder Lösungsmittelgemisch mit anschließendem Auskristallisieren und/oder Ausfällen, Isolieren, z.B. durch Filtration und Abtrennen von Lösungsmittelresten, z.B. durch Waschen hergestellt. Auch hier kann sich die Formierung der Mischung anschließen.

Bevorzugte organische Lösungsmittel sind dabei polare protische Lösungsmittel, wie Dimethylformamid, Dimethylsulfoxid oder N-Methylpyrrolidon. Es ist dabei vorteilhaft, die Mischungskomponente vollständig in Lösung zu bringen. Bei schwerer löslichen Mischungskomponenten kann das durch Erhöhung der Lösungsmittelmenge, der Lösetemperatur bzw. der Lösedauer erreicht werden. Um Lösungsmittelmengen einzusparen wird vorteilhaft bei erhöhter Temperatur gelöst und es kann bei Temperaturen bis hin zur Siedetemperatur des jeweiligen Lösungsmittels gearbeitet werden. Gegebenenfalls kann unter Druck die Temperatur auch darüber hinaus angehoben werden.

Für gewisse Anwendungsgebiete werden Pulvereinstellungen bevorzugt. Diese Pulver enthalten den Farbstoff, Dispergiermittel und andere Hilfsmittel, wie z.B. Netz-, Oxydations-, Konservierungs-und Entstaubungsmittel.

Ein bevorzugtes Herstellungsverfahren für pulverförmige Farbstoffzubereitungen besteht darin, daß den oben beschriebenen flüssigen Farbstoffdispersionen die Flüssigkeit entzogen wird, z.B. durch Vakuumtrocknung, Gefriertrocknung, durch Trocknung auf Walzentrocknern, vorzugsweise aber durch Sprühtrocknung.

Die Farbstoffgehalte der flüssigen Farbstoffeinstellungen liegen bei 20 bis 40 %, die Dispergiermittelgehalte bei ca. 20 bis 40 %. Bei Pulvereinstellungen liegen die Farbstoffgehalte bei 20 bis 60 % und die Dispergiermittelgehalte bei 40 bis 80 %. Aus ökonomischen Gründen wird ein Farbstoffgehalt von 20 % meist nicht unterschritten.

Die erfindungsgemäßen Farbstoffmischungen sind als solche oder auch im Gemisch mit anderen Dispersionsfarbstoffen vorzüglich zum Färben und Bedrucken von hydrophoben synthetischen Fasermaterialien und deren Mischungen mit natürlichen Faserstoffen geeignet.

Als hydrophobe synthetische Materialien kommen z.B. in Betracht: Cellulose-2 1/2-Acetat, Cellulosetriacetat, Polyamide und besonders Polyester, wie z.B. Polyethylenglykolterephthalat. Natürliche Faserstoffe sind z.B. Baumwollen, regenerierte Cellulosefasern oder Wolle.

Die hydrophoben synthetischen Materialien können in Form von flächen- oder fadenförmigen Gebilden vorliegen und z.B. zu Garnen oder gewebten, gewirkten oder gestrickten Textilstoffen verarbeitet sein.

Das Färben des genannten Fasergutes mit den erfindungsgemäßen Farbstoffmischungen kann in an sich bekannter Weise erfolgen, vorzugsweise aus wäßriger Suspension, gegebenenfalls in Gegenwart von Carriern, zwischen 90 bis ca. 110^{o}C nach dem Ausziehverfahren oder nach dem HT-Verfahren im Färbeautoklav bei 110 bis 140^{o}C, sowie nach dem sogenannten Thermofixierverfahren, wobei die Ware mit der Färbeflotte geklotzt und anschließend bei etwa 180 bis 230^{o}C fixiert wird.

Das Bedrucken der genannten Materialien kann in an sich bekannter Weise so durchgeführt werden, daß die erfindungsgemäße Farbstoffmischung in eine Druckpaste einverleibt wird und die damit bedruckte Ware zur Fixierung des Farbstoffs, gegebenenfalls in Gegenwart eines Carriers, bei Temperaturen zwischen 90 und 230^{o}C mit HT-Dampf, Druckdampf oder Trockenhitze behandelt wird.

Man erhält auf diese Weise hervorragende blaue Färbungen oder Drucke von sehr hoher Brillanz mit sehr guten Echtheitseigenschaften. In den bei den obigen Applikationen eingesetzten Färbe- und Klotzflotten sowie Druckpasten sollen die Farbstoffe der erfindungsgemäßen Farbstoffmischung in möglichst feiner Verteilung vorliegen. Die Feinverteilung der Farbstoffe erfolgt in an sich bekannter Weise dadurch, daß man die formierte Farbstoffmischung gegebenenfalls zusammen mit Färbereihilfsmitteln wie z.B. Egalisierhilfsmitteln in die Färbe- bzw. Klotzflotte einrührt. Zur Herstellung der Färbeflotten werden die erforderlichen Mengen der Farbstoffeinstellungen, die gemäß den obigen Angaben hergestellt wurden, mit dem Färbemedium, vorzugsweise mit Wasser, so weit verdünnt, daß sich für die Färbung ein Flottenverhältnis von 1 : 5 bis 1 : 50 ergibt. Zusätzlich werden den Flotten im allgemeinen weitere Färbereihilfsmittel, wie Dispergier-, Netz- und Fixierhilfsmittel zugesetzt. Durch Zugabe von organischen und anorganischen Säuren wie Essigsäure, Bernsteinsäure, Borsäure oder Phosphorsäure wird ein pH-Wert von 4 bis 5, vorzugsweise von 4,5 eingestellt. Es ist vorteilhaft, den eingestellten pH-Wert abzupuffern und eine ausreichende Menge eines Puffersystems zuzusetzen. Ein vorteilhaftes Puffersystem ist z.B. das System Essigsäure/Natriumacetat.

Soll der Farbstoff für den Textildruck herangezogen werden, so werden die erforderlichen Mengen der Farbstoffeinstellungen in an sich bekannter Weise zusammen mit Verdickungsmitteln, wie z.B. Alkali-Alginaten oder dergleichen, und gegebenenfalls weiteren Zusätzen, wie z.B. Fixierbeschleunigern, Netzmitteln und Oxydationsmitteln, zu Druckpasten verknetet.

### Beispiel 1

10,0 g des Farbstoffs der Formal Ia 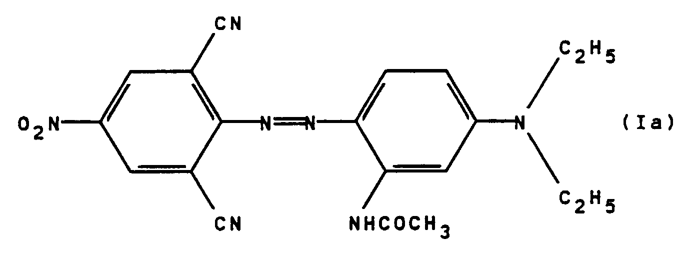
12,1 g des Farbstoffs der Formel IIa 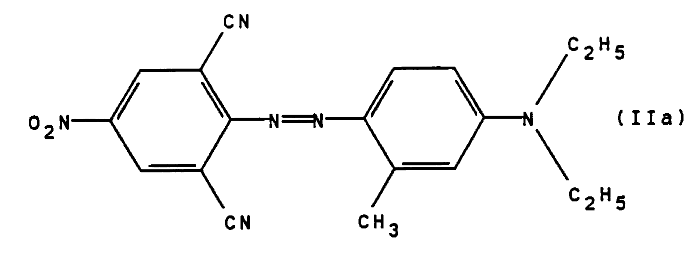 und
7,2 g des Farbstoffs der Formel IIIa 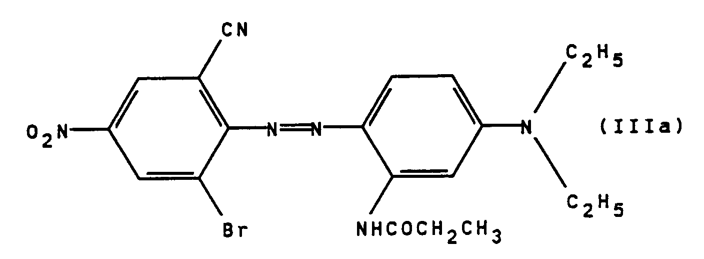 werden gemeinsam mit 227,6 g Wasser, 86,8 g eines höher molekularen Ligninsulfonats und 6,3 g eines Arylpolyglykolethers mit einer Dissolverscheibe homogenisiert und der pH-Wert mit 2,6 ml 50 %iger Essigsäure auf 8,0 gestellt. Anschließend wird dieser Anschlag in einer wassergekühlten Perlmühle bis zu einer Feinverteilung von < 5 µ gemahlen, der so erhaltene Mahlteig zur Abtrennung vom Mahlteig gesiebt und danach mit einem Sprühtrockner getrocknet.

1,25 g des so erhaltenen Farbstoffs werden in 2000 g Wasser dispergiert. Die Dispersion wird mit 4 g Ammoniumsulfat, 2 g eines handelsüblichen Dispergiermittels auf Basis eines Kondensationsproduktes aus Naphthalinsulfonsäurenatriumsalz und Formaldehyd und 2 g eines Kondensationsprodukts aus m-Kresol, Formaldehyd und Natriumsulfit versetzt und mit Essigsäure auf einen pH-Wert von 5,5 gestellt. In die so erhaltene Färbeflotte bringt man 100 g eines texturierten Polyestergewebes auf Basis Polyethylenglykolterephthalat ein und färbt 1/2 Stunde bei 120^{o}C. Nach anschließendem Spülen, reduktiver Nachbehandlung mit einer 0,2 %igen Natriumdithionitlösung während 15 Minuten bei 70 bis 80^{o}C, Spülen und Trocknen, erhält man eine farbstarke blaue Färbung mit hervorragenden coloristischen Eigenschaften.

Bringt man zur Herstellung eines Nachzugs in das Färbebad nochmals 100 g eines texturierten Polyestergewebes auf Basis Polyethylenglykolterephthalat ein und färbt 1 Stunde bei 135^{o}C und behandelt den Nachzug wie vorstehend bei der eigentlichen Färbung angegeben nach, so erhält man eine nahezu farblose Färbung.

### Beispiel 2

11,0 g des Farbstoffs der Formel Ib 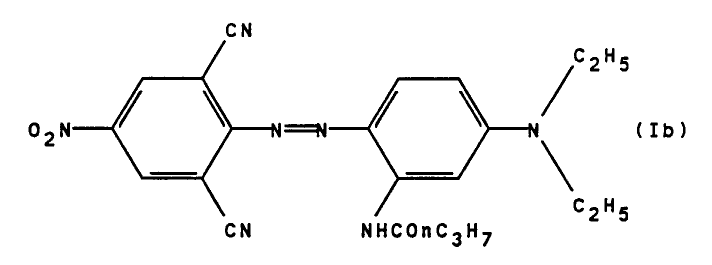
12,0 g des Farbstoffs der Formel IIa und
7,3 g des Farbstoffs der Formel IIIb 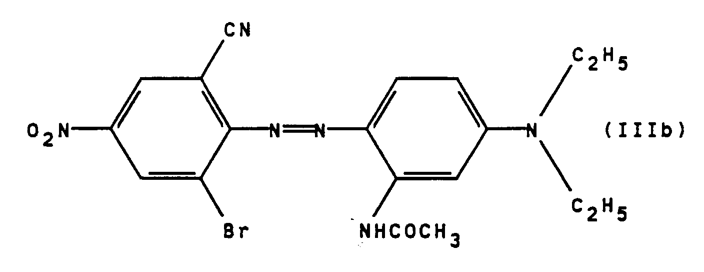 werden gemeinsam in 243,7 g Wasser mit 43,6 g Natriumligninsulfonat und 12,6 g eines nichtionischen Dispergiermittels auf Basis Arylpolyglykolether (4-((4'-Benzyl-)-phenyl)phenol+15 AeO) gemischt, mit 50 %iger Essigsäure auf einen pH-Wert von 5,9 gestellt und mit dem Zackenrührer homogenisiert. Dann wird die erhaltene Dispersion im Autoklaven innerhalb von 2 Stunden auf 100^{o}C erwärmt und 2 Stunden bei dieser Temperatur gerührt. Nach dem Abkühlen werden 43,6 g eines Kondensationsproduktes aus Kresol, Formaldehyd und Naphthol-2-sulfonsäure-natriumsalz zugesetzt und die Dispersion mit 50%iger Essigsäure auf pH 8,0 gestellt. Anschließend wird 2 Stunden bei Raumtemperatur in der Perlmühle bis zur Feinverteilung (80 % ≤ 1 µm) gemahlen, gesiebt und im Sprühtrockner getrocknet. Das so erhaltene Farbstoffpulver wird wie folgt zum Färben eingesetzt.

0,12 g des so hergestellten Farbstoffpulvers werden in 250 ml Wasser eingerührt und unter Rühren mit 0,4 g eines handelsüblichen Dispergiermittels auf Basis eines Kondensationsprodukts aus m-Kresol, Formaldehyd und Natriumsulfit, 0,8 g eines handelsüblichen Carriers auf Basis von Methylnaphthalin, 0,8 g Natriumacetat krist. sowie 1,2 ml 30 %ige Essigsäure versetzt und mit Wasser auf 400 ml aufgefüllt. Der pH-Wert des Färbebads beträgt 4,5. In dieses Färbebad werden 10 g eines Polyestergewebes auf Basis von Polyethylenglykolterephthalat eingebracht. Im offenen Gefäß wird 90 Minuten bei 95^{o}C gefärbt, das Färbegut herausgenommen, gespült, reduktiv mit alkalischer 0,2 %iger Natriumdithionitlösung (15 Minuten bei 60 bis 70^{o}C) nachbehandelt, erneut gespült und getrocknet. Dabei wird eine farbstarke blaue Färbung mit hervorragenden coloristischen Eigenschaften erhalten.

Der bei 135°C 1/2 Stunde gefärbte Nachzug ist fast farblos.

### Beispiel 3

5,0 g des Farbstoffs der Formel Ia, 6,0 g des Farbstoffs der Formel Ib, 11,0 g des Farbstoffs der Formel IIa und 7,5 g des Farbstoffs der Formel IIIa werden, wie in Beispiel 1 beschrieben, in ein Farbstoffpulver überführt.

0,12 g des so hergestellten Farbstoffpulvers werden in 200 ml Wasser eingerührt und unter Rühren mit 0,2 g eines handelsüblichen Dispergiermittels auf Basis eines Kondensationsprodukts aus m-Kresol, Formaldehyd und Natriumsulfit, 0,3 g eines handelsüblichen Carriers auf Basis von Methylnaphthalin, 0,4 g Natriumacetat krist. sowie 1,2 ml 30 %ige Essigsäure versetzt. Der pH-Wert des Färbebads beträgt 4,5. In dieses Färbebad werden 10 g eines Polyestergewebes auf Basis von Polyethylenglykolterephthalat eingebracht und in einer Färbebombe unter Druck 1 Stunde bei 106°C gefärbt. Man stellt, wie vorstehend beschrieben, durch Spülen, reduktive Nachbehandlung, erneutes Spülen und Trocknen, fertig und und erhält ebenfalls eine farbstarke blaue Färbung mit sehr guten coloristischen Echtheiten.

In der nachstehenden Tabelle sind weitere erfindungsgemäße Farbstoffmischungen angegeben, die nach den vorstehenden Angaben herstellbar sind und die auf Polyestermaterialien ebenfalls farbstarke blaue Färbungen bzw. Drucke mit ebenfalls sehr guten coloristischen Eigenschaften liefern.

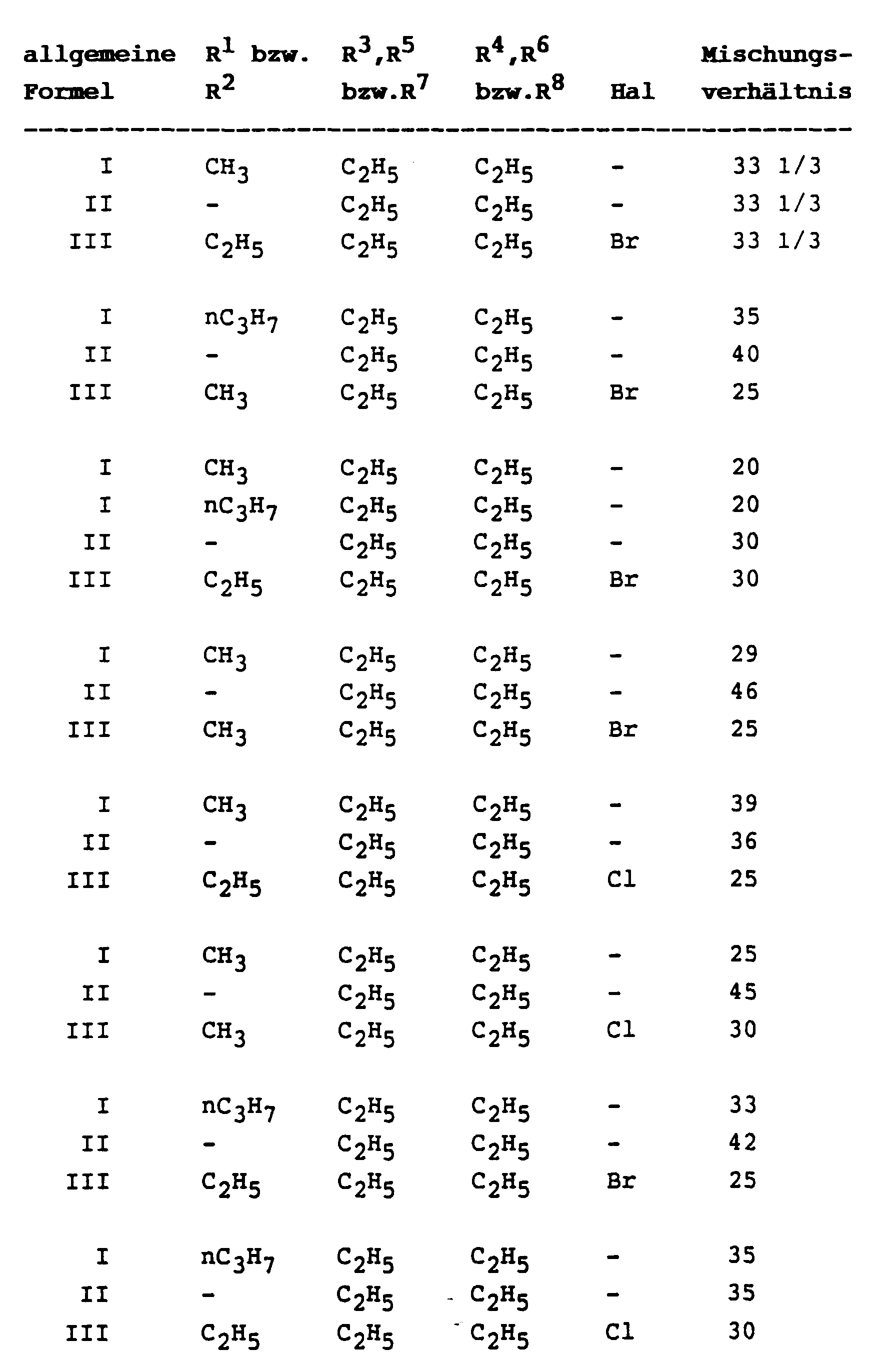

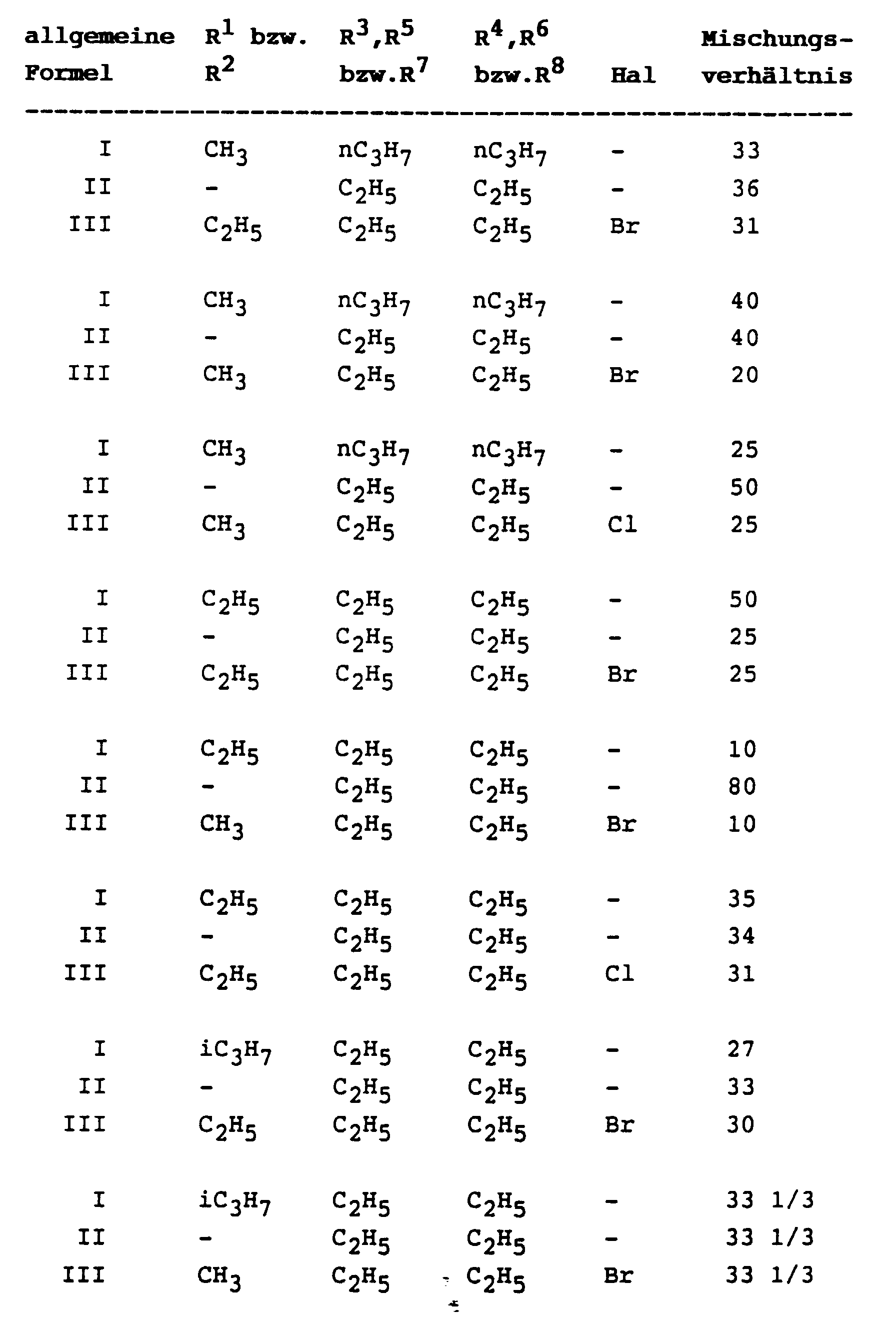

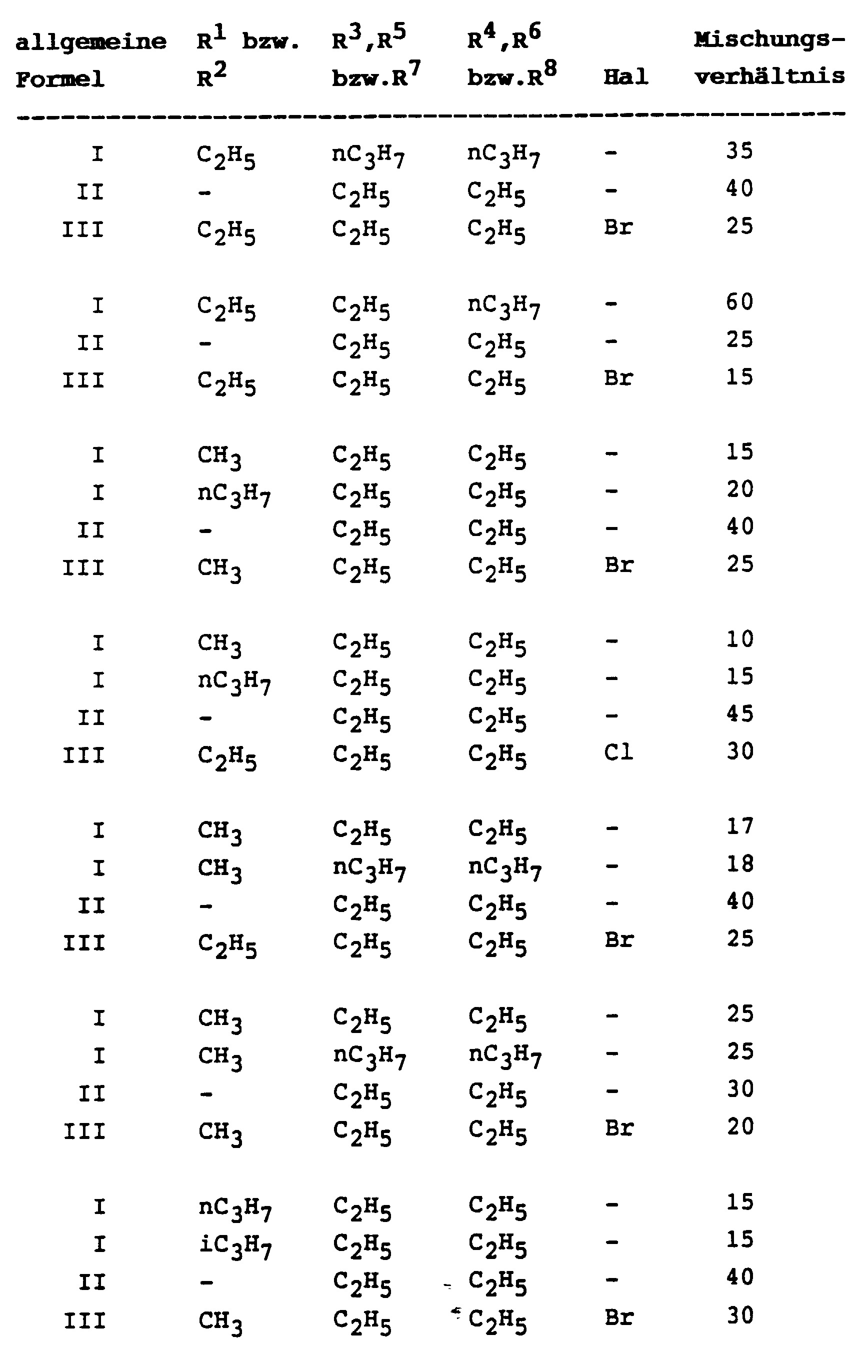

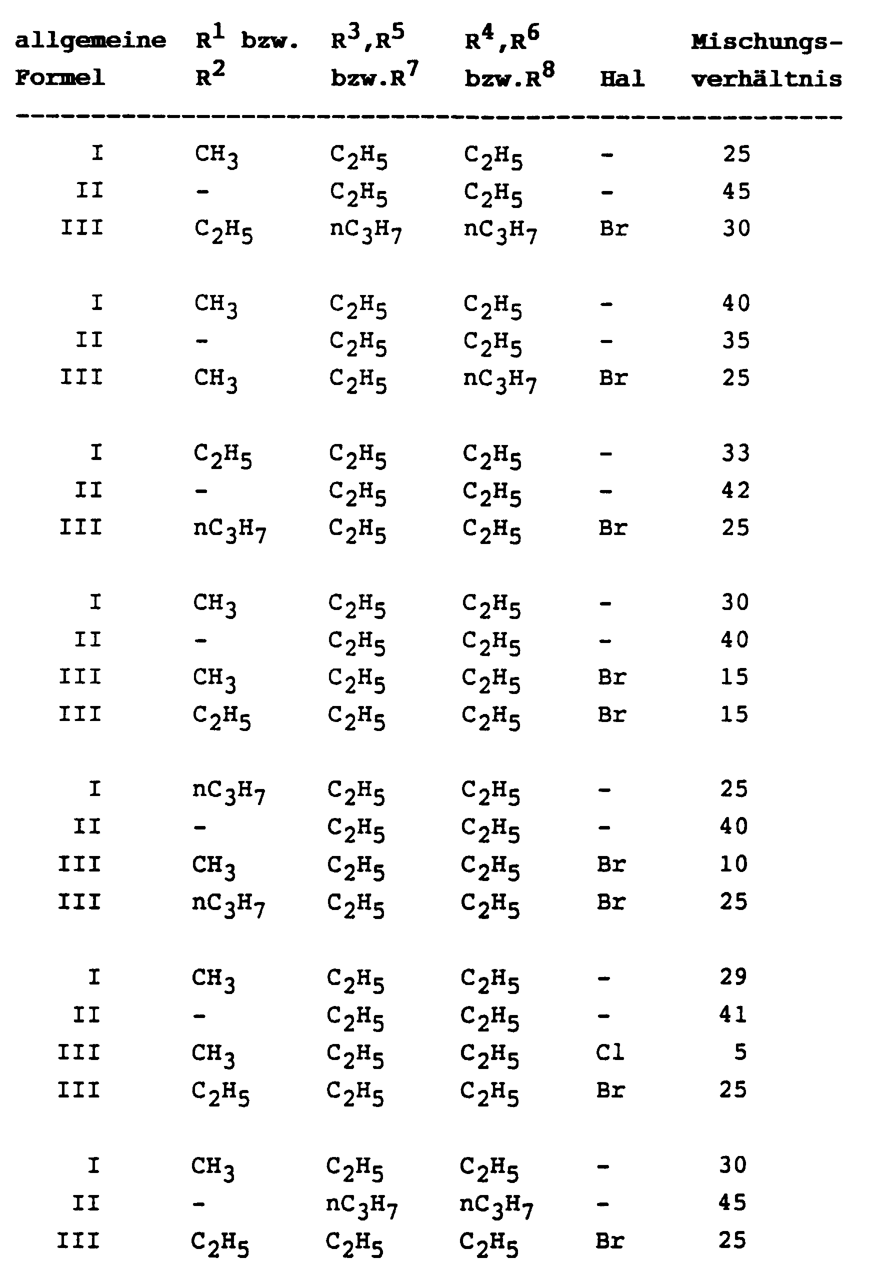

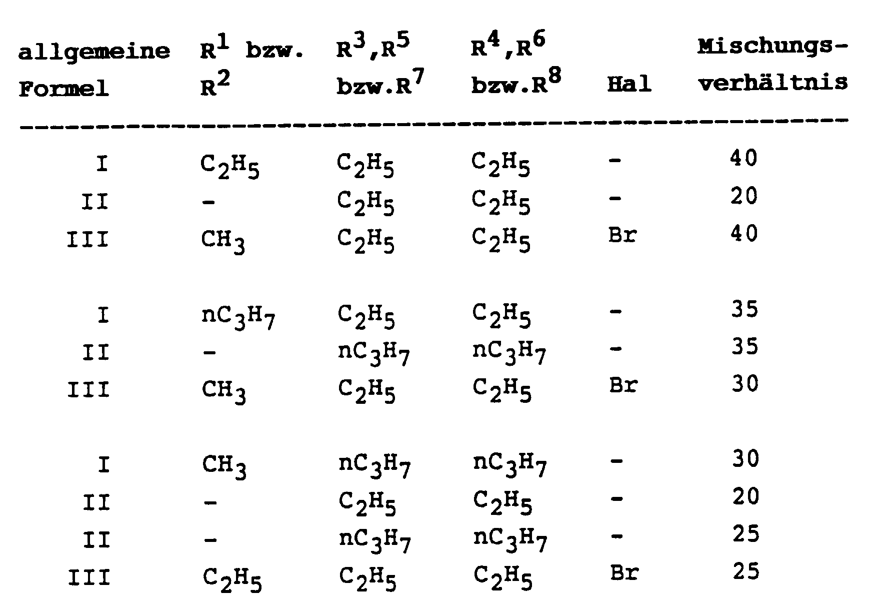

## Patentansprüche

1. Mischungen von Monoazofarbstoffen, dadurch gekennzeichnet, daß sie aus einem oder mehreren Farbstoffen der allgemeinen Formel I 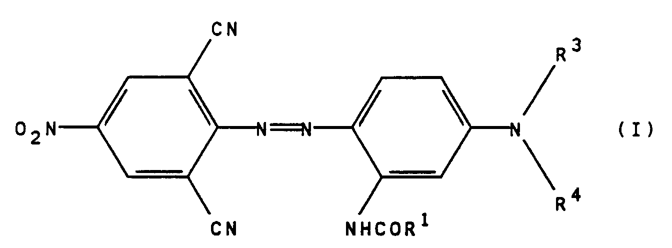 einem oder mehreren Farbstoffen der allgemeinen Formel II 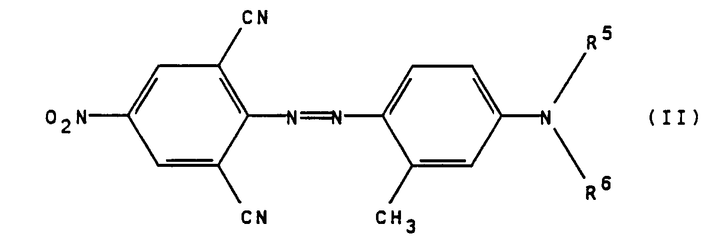 und einem oder mehreren Farbstoffen der allgemeinen Formel III 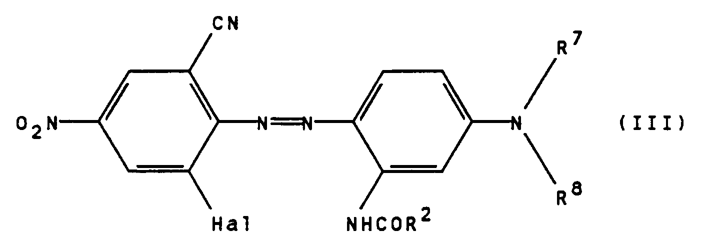 bestehen, wobei
R¹ bis R⁸ unabhängig voneinander Methyl, Ethyl oder n-Propyl und R¹ und R² darüberhinaus auch i-Propyl und
Hal Chlor oder Brom
bedeuten.

2. Mischung gemäß Anspruch 1, dadurch gekennzeichnet, daß Hal Brom bedeutet.

3. Mischung gemäß Anspruch 1 und/oder 2, dadurch gekennzeichnet, daß alle Reste R³ bis R⁸ gleich sind und für n-Propyl oder insbesondere Ethyl stehen.

4. Mischung gemäß einem oder mehreren der Ansprüche 1 bis 3, dadurch gekennzeichnet daß R¹/R³/R⁴ Methyl/Ethyl/Ethyl, Methyl/n-Propyl/n-Propyl, Ethyl/Ethyl/Ethyl, n-Propyl/Ethyl/Ethyl oder i-Propyl/Ethyl/Ethyl; R⁵ und R⁶ Ethyl; und Hal/R²/R⁷/R⁸ Brom/Methyl/Ethyl/Ethyl oder Brom/Ethyl/ Ethyl/Ethyl bedeuten.

5. Mischung gemäß einem oder mehreren der Ansprüch 1 bis 4, dadurch gekennzeichnet, daß sie zwei Farbstoffe der allgemeinen Formel I enthält, wobei die Reste R¹, R³ und R⁴ die Bedeutungen Methyl, Ethyl, Ethyl und n-Propyl, Ethyl, Ethyl oder die Bedeutungen Methyl, Ethyl, Ethyl und Methyl, n-Propyl, n-Propyl aufweisen.

6. Verfahren zur Herstellung der Mischungen gemäß einem oder mehreren der Ansprüche 1 bis 5, dadurch gekennzeichnet, daß man
a) die getrennt hergestellten und gegebenenfalls formierten Einzelfarbstoffe mischt oder
b) die getrennt hergestellten und formierten Einzelfarbstoffe in eine Färbeflotte einrührt oder
c) die getrennt hergestellten Einzelfarbstoffe gemeinsam formiert.

7. Verfahren gemäß Anspruch 6a), dadurch gekennzeichnet, daß man die Farbstoffe der allgemeinen Formeln I und II durch gemeinsamen Cyanaustausch herstellt, gegebenenfalls gemeinsam formiert und dann mit dem oder den getrennt hergestellten und gegebenenfalls formierten Farbstoffen der allgemeinen Formel III mischt.

8. Verfahren zur Herstellung der Mischungen gemäß einem oder mehreren der Ansprüche 1 bis 5, dadurch gekennzeichnet, daß man die Einzelfarbstoffe gemeinsam, gegebenenfalls unter Druck in Wasser eine halbe bis mehrere Stunden auf Temperaturen von 50 bis 150^{o}C, vorzugsweise 90 bis 130^{o}C erhitzt und wieder abkühlt und gegebenenfalls die Formierung der Mischung anschließt.

9. Verfahren zur Herstellung der Mischungen gemäß einem oder mehreren der Ansprüche 1 bis 5, dadurch gekennzeichnet, daß man die Einzelfarbstoffe gemeinsam in einem organischen Lösungsmittel oder Lösungsmittelgemisch löst, anschließend auskristallisiert und/oder ausfällt, isoliert und gegebenenfalls die Formierung der Mischung anschließt.

10. Verwendung der Mischungen gemäß einem oder mehreren der Ansprüche 1 bis 5 zum Färben und Bedrucken von hydrophoben synthetischen Fasermaterialien und deren Mischungen mit natürlichen Faserstoffen.

## Claims

1. Mixtures of monoazo dyes, characterised in that they comprise one or more dyes of the general formula I 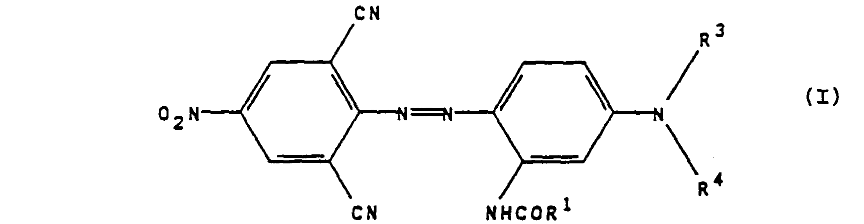 one or more dyes of the general formula II 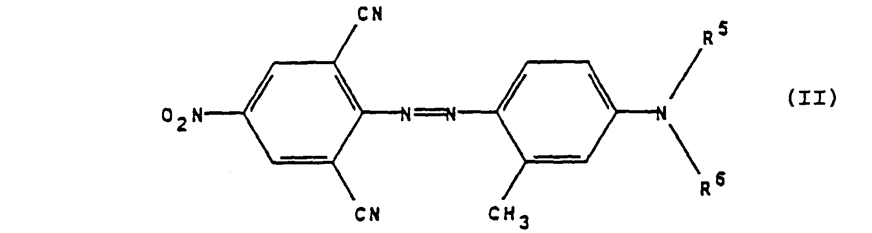 and one or more dyes of the general formula III 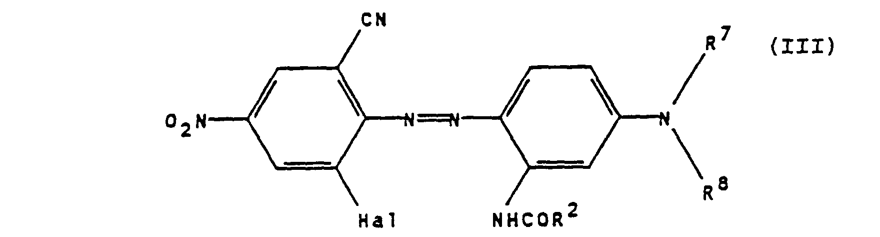 in which
R¹ to R⁸, independently of one another, are methyl, ethyl or n-propyl and R¹ and R² may each also be i-propyl and
Hal is chlorine or bromine.

2. Mixture according to Claim 1, characterised in that Hal is bromine.

3. Mixture according to Claim 1 and/or 2, characterised in that all radicals R³ to R⁸ are identical and represent n-propyl or, in particular, ethyl.

4. Mixture according to one or more of Claims 1 to 3, characterised in that R¹/R³/R⁴ are methyl/ethyl/ ethyl, methyl/n-propyl/n-propyl, ethyl/ethyl/ethyl, n-propyl/ethyl/ethyl or i-propyl/ethyl/ethyl; R⁵ and R⁶ are ethyl; and Hal/R²/R⁷/R⁸ are bromine/ methyl/ethyl/ethyl or bromine/ethyl/ethyl/ethyl.

5. Mixture according to one or more of Claims 1 to 4, characterised in that it comprises two dyes of the general formula I in which the radicals R¹, R³ and R⁴ have the meanings methyl, ethyl, ethyl and n-propyl, ethyl, ethyl or the meanings methyl, ethyl, ethyl and methyl, n-propyl, n-propyl.

6. Process for the preparation of the mixtures according to one or more of Claims 1 to 5, characterised in that
a) the separately prepared and finished or unfinished individual dyes are mixed or
b) the separately prepared and finished individual dyes are stirred into a dye liquor or
c) the separately prepared individual dyes are jointly finished.

7. Process according to Claim 6a), characterised in that the dyes of the general formulae I and II are prepared by joint cyano exchange and, if desired, jointly finished and then mixed with the separately prepared and finished or unfinished dye or dyes of the general formula III.

8. Process for the preparation of the mixtures according to one or more of Claims 1 to 5, characterised in that the individual dyes are jointly heated at temperatures of 50 to 150°C, preferably 90 to 130°C, in water and, if desired, under pressure, for half an hour to several hours and cooled again, followed, if desired, by finishing of the mixture.

9. Process for the preparation of the mixtures according to one or more of Claims 1 to 5, characterised in that the individual dyes are jointly dissolved in an organic solvent or solvent mixture, then crystallised and/or precipitated, and isolated, followed, if desired, by finishing of the mixture.

10. Use of the mixtures according to one or more of Claims 1 to 5 for the dyeing and printing of hydrophobic synthetic fibre materials and blends thereof with natural fibre materials.

## Revendications

1. Mélanges de colorants monoazoïques, caractérisés en ce qu'ils sont constitués d'un ou plusieurs colorants de formule générale I 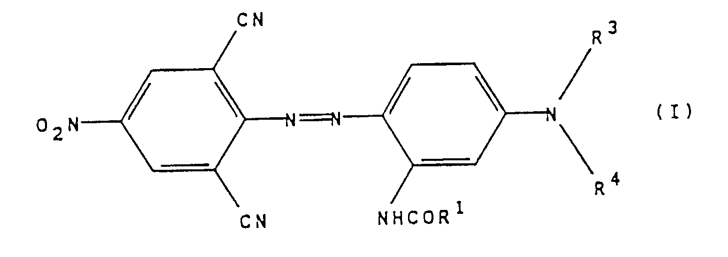 d'un ou plusieurs colorants de formule générale II 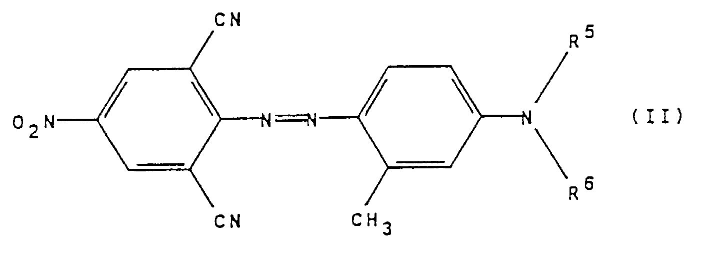 et d'un ou plusieurs colorants de formule générale III 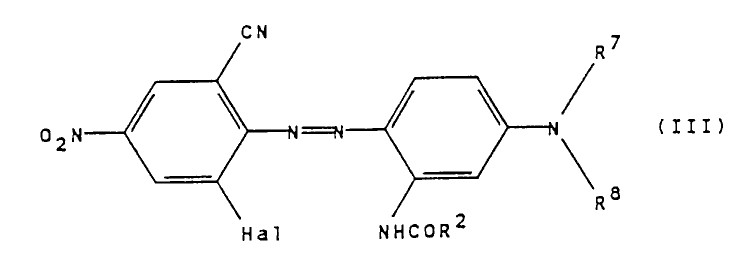 où
R¹ à R⁸, indépendamment les uns des autres, sont des radicaux méthyle, éthyle ou n-propyle, et R¹ et R² représentent en outre aussi des groupes isopropyle, et
Hal est le chlore ou le brome.

2. Mélange selon la revendication 1, caractérisé en ce que Hal est le brome.

3. Mélange selon la revendication 1 et/ou 2, caractérisé en ce que tous les radicaux R³ à R⁸ sont identiques et représentent des radicaux n-propyle ou en particulier éthyle.

4. Mélange selon l'une ou plusieurs des revendications 1 à 3, caractérisé en ce que R¹/R³/R⁴ correspond à méthyle/éthyle/éthyle, méthyle/n-propyle/n-propyle, éthyle/éthyle/éthyle, n-propyle/éthyle/éthyle ou isopropyle/éthyl/éthyle ; R⁵ et R⁶ sont chacun le groupe éthyle ; et Hal/R²/R⁷/R⁸ correspond à brome/méthyle/ éthyle/éthyle ou brome/éthyle/éthyle/éthyle.

5. Mélange selon l'une ou plusieurs des revendications 1 à 4, caractérisé en ce qu'il contient deux colorants de formule générale I, où les radicaux R¹, R³ et R⁴ ont les significations méthyle, éthyle, éthyle et n-propyle, éthyle, éthyle, ou encore les significations méthyle, éthyle, éthyle et méthyle, n-propyle, n-propyle.

6. Procédé de préparation des mélanges selon l'une ou plusieurs des revendications 1 à 5, caractérisé en ce que
a) on mélange les colorants individuels, préparés séparément et éventuellement formulés, ou bien
b) on délaie dans le bain de teinture les colorants individuels, préparés séparément et formulés, ou bien
c) on formule simultanément les colorants individuels préparés séparément.

7. Procédé selon la revendication 6a), caractérisé en ce qu'on prépare les colorants de formules générales I et II par un échange commun de groupes cyano, on les formule éventuellement ensemble, puis on les mélange au ou aux mélanges de formule générale III, préparés séparément et éventuellement formulés.

8. Procédé de préparation des mélanges selon l'une ou plusieurs des revendications 1 à 5, caractérisé en ce qu'on chauffe les colorants individuels ensemble, éventuellement sous pression dans l'eau, pendant une 1/2 heure à plusieurs heures à des températures de 50 à 150°C et de préférence de 90 à 130°C, et on les refroidit de nouveau, et éventuellement on procède ensuite à la formulation du mélange.

9. Procédé de préparation des mélanges selon l'une ou plusieurs des revendications 1 à 5, caractérisé en ce qu'on dissout ensemble les colorants individuels dans un solvant organique ou dans un mélange de solvants organiques, puis on les sépare par cristallisation et/ou par précipitation, on les isole et éventuellement on procède ensuite à la formulation du mélange.

10. Utilisation des mélanges selon l'une ou plusieurs des revendications 1 à 5 pour teindre et imprimer des matières fibreuses synthétiques hydrophobes et leurs mélanges avec des matières fibreuses naturelles.
